# EUROPÄISCHE PATENTSCHRIFT

(11) **EP 0 426 962 B1**
(45) Veröffentlichungstag und Bekanntmachung des Hinweises auf die Patenterteilung: **30.11.1994**
(21) Anmeldenummer: 90116627.2
(22) Anmeldetag: 30.08.1990
(51) Int. Cl.: B60P 3/00

(54) **Strassentransportfahrzeug mit innen angeordnetem Laderaum für ein Transportgestell mit beiderseits nach innen geneigter Beladung, vorzugsweise aus aufrecht stehenden Glasscheiben oder Glasscheibenpaketen**
Roadtruck with internal loading space for a transport rack with sloping sides, e.g. for window panes or window panes-packet
Véhicule routier à capacité de charge intérieure pour porte-charges à côtés inclinés, en particulier pour vitres ou paquet de vitres

(30) Priorität: 07.11.1989 DE 8913165 U; 23.01.1990 DE 9000665 U
(43) Veröffentlichungstag der Anmeldung: 15.05.1991
(73) Patentinhaber: FAHRZEUGBAU LANGENDORF GMBH & CO. KG, D-45731 Waltrop (DE)
(72) Erfinder: Langendorf, Heinrich, W-4355 Waltrop (DE); Olfers, Reinhard, W-4354 Datteln (DE)
(74) Vertreter: Herrmann-Trentepohl, Werner, Dipl.-Ing.

(56) Entgegenhaltungen:
- DE-A- 2 719 925
- DE-A- 3 516 914
- DE-U- 8 717 269
- DE-U- 8 808 179
- DE-U- 8 810 164
- DE-U- 8 812 163

## Beschreibung

Die Erfindung betrifft ein Straßentransportfahrzeug gemäß dem Oberbegriff des Ansprüches 1.

Straßentransportfahrzeuge gemäß der Erfindung eignen sich für den Transport von Großtafeln, weil der Zwischen den geteilten Hinterachsen des meistens als Auflieger ausgebildeten Fahrzeuges angeordnete Laderaum eine für die Beladung ausnutzbare vergrößerte Höhe gegenüber üblichen Straßentransportern aufweist und das Transportgestell die Großtafeln in schräg geneigter Stellung festhält. Obwohl Großtafeln auch aus anderen Werkstoffen, z.B. aus Stahlbeton bestehen können, wird die Erfindung im folgenden anhand des Transportes von großformatigen Glastafeln näher erläutert, die hauptsächlich auf sogenannten Floatglasanlagen produziert werden.

Das erfindungsgemäße Straßentransportfahrzeug erlaubt die Verwendung der in vergleichsweise großer Zahl in der Glashütte vorrätigen Transportgestelle in vereinfachter Ausführung, weil die fahrzeugfesten Sicherungsvorrichtungen Transportsicherungen überflüssig machen, welche an dem Transportgestell selbst angebracht werden. Diese fahrzeugfesten Sicherungsvorrichtungen werden mit Hilfe vorzugsweise hydraulischer Schubkolbengetriebe bewegt und festgestellt, was durch die Energie eines fahrzeugfesten Druckerzeugers erfolgen kann. Zur Vermittlung der Bewegungsenergie dienen die jeder Sicherungsvorrichtung zugeordneten Parallelkurbelgetriebe, von denen eines der insgesamt vier Glieder gestellfest angeordnet ist. Bekanntlich sind Parallelkurbelgetriebe kinematisch sogenannte Vielgelenkketten, bei denen die gegenüberliegenden Getriebeglieder gleich lang sind und parallel liegen, wobei die Kurbeln in gleichem Drehsinn und in gleicher Winkelgeschwindigkeit laufen. Hierdurch wird erreicht, daß die Transportstützen in der Sicherungs- und in der Freigabestellung, aber auch über ihren vollen Bewegungsbetrag in der der Beladung entsprechenden Schrägstellung festgehalten und parallel zu sich selbst geführt werden.

Übermäßige dynamische Belastungen der Ladung bei der Anlage der Transportstützen an die Glasscheiben werden auf diese Weise verhindert.

Die Erfindung geht von einem vorbekannten Straßentransportfahrzeug dieser Art aus (DE-A-35 16 914). Hierbei besteht jede Sicherungsvorrichtung aus einer Rahmenkonstruktion, deren horizontale Rahmenglieder praktisch über die volle Länge des Laderaumes reichen. Dagegen sind die senkrechten Rahmenglieder vergleichsweise kurz, was daran liegt, daß die Parallelkurbelgetriebe die Sicherungsvorrichtungen in die Freigabestellung weit nach oben in den Laderaum führen. Die horizontalen Rahmenglieder bilden die Unterkonstruktion der Transportstützen, welche Hohlprofile aus elastischem Werkstoff aufweisen, welche in der Sicherungsstellung der Außenseite der Glastafeln aufgelegt werden. Die jeder Sicherungsvorrichtung zugeordneten Parallelkurbelgetriebe sind mit ihrer senkrecht angeordneten Basis auf dem Fahrzeuglängsträger befestigt, der den Laderaum einschließt.

Unter solchen Voraussetzungen ergibt sich einerseits aus den Basisträgern der Getriebe eine nicht unerhebliche Verminderung der Nutzlast des Fahrzeuges. Andererseits ist die Festlegung der Glasscheiben wegen der begrenzten Auflageflächen der elastisch nachgiebigen Transportstützen auf den Glasscheiben unbefriedigend. Deswegen können die Glasscheibenpakete unter dem Einfluß der Transportbeanspruchungen Bewegungen ausführen, bei denen die Glasscheiben aufeinanderreiben, wodurch Verkratzungen der Scheibenoberfläche auftreten, die die Scheiben unbrauchbar machen.

Ein weiterer Nachteil ergibt sich bei Verwendung unterschiedlicher Transportgestelle. Beide Arten von Transportgestellen werden jedoch während einer langen Übergangoperiode weiterbenutzt. Da die Transportstützen keinem Möglichkeit haben, sich auf veränderte Neigungswinkel einzustellen, wirkt sich die Verwendung der neuen Transportgestelle in einer unsicheren Festlegung des Glases aus.

Es ist allerdings auch ein Straßentransportfahrzeug bekannt (DE-U-87 17 269), bei dem die Sicherungsvorrichtungen jeder Laderaumseite auf einzeln angetriebene Transportstützen aufgeteilt sind, denen jeweils ein Antrieb zugeordnet ist. Hierdurch läßt sich eine verhältnismäßig größere Berührungsfläche der Transportstützen in der Sicherungsstellung erzielen und die Nutzlast vergrößern, weil der Antrieb und das Getriebe guer zum Laderaum angeordnet sind. Das Getriebe besteht jedoch lediglich aus einer Schwinge, die das auf dem Fahrzeuglängsträger angelenkte Schubkolbengetriebe mit einem Gelenk angeschlossen ist. An die Schwinge ist die Transportstütze mit ihrer Unterkonstruktion angelenkt, die einen verhältnismäßig flachen und breiten elastischen bzw. elastomeren Belag unterstützt, welcher in der Transportstellung den Glasscheiben aufliegt.

Die Anlenkung der Transportstützen hat zur Folge, daß sie im wesentlichen in der senkrechten Mitte der Unterkonstruktion angeordnet werden muß, um die Transportstützen im Gleichgewicht während der Bewegung in die beiden Betriebsstellungen der Sicherungsvorrichtung zu halten. Die Transportgestelle werden jedoch mit Paketen verschiedener senkrechter Abmessungen beladen. Bei Floatglasscheiben können diese Dimensionen auf ca. 1,5 m zurückgehen und machen dann nur noch einen Bruchteil der halben Höhe des Transportgestells aus. Dann gerät die Anlenkung der Schwinge und damit der Kraftangriffspunkt des Schubkolbengetriebes über die Oberkante des Glasscheibenpaketes. In der Transportstellung verschwenken sich dann die Transportstützen in ihrer Anlenkung nach innen und beschädigen die oberen Kanten des Glases.

Der Erfindung liegt die Aufgabe zugrunde, ein Transportfahrzeug der eingangs beschriebenen allgemeinen Ausbildung so einzurichten, daß eine sichere Verspannung der Beladung gewährleistet ist und trotz unterschiedlicher Abmessungen der Beladung Beschädigungen des Ladegutes ausgeschlossen werden.

Diese Aufgabe löst die Erfindung mit den Merkmalen des Ansprüches 1. Weitere Merkmale der Erfindung sind Gegenstand der Unteransprüche.

Gemäß der Erfindung ergibt sich durch die Anordnung des Parallelkurbelgetriebes eine Führung, welche die Transportstützen über den gesamten Bewegungsbetrag parallel zu Rieb selbst halten. Das bildet die Voraussetzung dafür, daß die Befestigung der Unterkonstruktion der Transportstütze am Abtrieb des Getriebes aus der Mitte heraus verlegt werden kann, ohne daß die Transportstützen in den labilen Gleichgewichtszustand übergehen. Diese Verlegung des Kraftangriffspunktes aus der Mitte erfolgt nämlich erfindungsgemäß nach unten. Dadurch ist es möglich, Glasscheibenpakete geringerer vertikaler Abmessungen ohne Beschädigüng ihrer oberen Kanten zu transportieren, weil die Kraft des Transportstützenantriebes auch dann noch unmittelbar auf die Oberfläche des Glasscheibenpaketes wirkt. Die dazu erforderliche Festlegung der Unterkonstruktion der Transportstütze am Abtrieb des Parallelkurbelgetriebes erfolgt erfindungsgemäß an einem Kragarm der Getriebekoppel und unter Einschaltung eines Puffers, so daß infolge der begrenzten Nachgiebigkeit des Puffers gegen Schwenkbewegungen der Transportstütze in der guer zum Laderaum orientierten Hauptebene des Getriebes Winkeländerungen des Transportgestells ausgeglichen werden. Dadurch kann das erfindungsgemäße Straßentransportfahrzeug ohne Änderungen und ohne Nachteile Transportgestelle der alten und der neueren Art transportieren.

Die Erfindung hat den Vorteil, daß das neue Straßentranspostfahrzeug unterschiedliah hohe Beladungen und unterschiedliche Transportgestelle ohne Änderung an den Sicherungsvorrichtungen vornehmen zu müssen, beschädigungsfrei transportiert. Dabei können die Transportstützen mit den üblichen elastomeren bzw. elastischen Belägen versehen sein, welche praktisch in Längsrichtung des Laderaumes keine Nachgiebigkeit aufweisen und daher die Verschiebungen der Beladung verhindern.

Mit den Merkmalen des Ansprüches 2 wird ein weiterer Vorteil erreicht. Bauartbedingt sind bei den eingangs beschriebenen Straßentransportfahrzeugen die Transportgestelle nicht exakt mit der Mitte des Laderaumes ausgefluchtet. Das führt in der Regel dazu, daß die auf einen begrenzten Bewegungsbetrag eingestellten Sicherungsvorrichtungen in der Transportstellung die beiden Seiten des Transportgestells und der Beladung unterschiedlich belasten. In extremen Fällen kann das zu Glasbruch führen, hat aber stets eine unsichere Festlegung der Ladung und des Transportgestells zur Folge. Mit den Merkmalen des Anspruches 2 lassen sich derartige Fehlausrichtungen des Transportgestells im Laderaum ausgleichen. Dabei wird die Eigenschaft der Parallelkurbelgetriebe ausgenutzt, die an die Kragarme der Getriebekoppeln angeschlossenen Transportstützen über größere Bewegungsbeträge parallel zu sich selbst zu führen.

Es ist zweckmäßig, jede Bewegungsmöglichkeit der Transportstützen in Längsrichtung des Laderaumes auszuschalten. Das ermöglichen die Merkmale des Anspruches 3. Dadurch läßt sich erreichen, daß die Transportstützen mit einem gewissen Andruck während des Transportes das Transportgestell und seine Beladung verspannen. Das hat zur Folge, daß die in den Anlenkungen des Getriebes unvermeidlichen Bewegungstoleranzen ausgeglichen werden, wodurch eine sichere Festlegung des Transportgestells begünstigt wird.

Die Ausführungsform nach dem Anspruch 4 gewährleistet diese einseitige Nachgiebigkeit der Puffer auf verhältnismäßig einfache Weise, indem die Nachgiebigkeit durch Mehrfachanordnung von Formkörpern in senkrechter und horizontaler Richtung praktisch ausgeschlossen wird.

Eine zweckmäßige Ausführungsform von Puffern beschreibt der Anspruch 5. Hierbei sind bei zweckentsprechender Wahl der Profilstegbreite und Profilsteglänge praktisch alle Bewegungsmöglichkeiten in der Stütz ebene des Puffers ausgeschaltet, so daß die Nachgiebigkeit nur noch senkrecht dazu besteht.

Die Merkmale des Anspruches 6 können unabhängig von den Merkmalen des Anspruches 1 verwirklicht werden. Sie ermöglichen nämlich den gleichzeitigen Transport von Großtafeln mit unterschiedlichen senkrechten Abmessungen, indem sie die innenliegenden Stützplatten mit den größeren senkrechten Abmessungen über die Stützplatten verspannen, während die außen angeordneten Großtafeln mit den geringeren senkrechten Abmessungen vorzugsweise wie beschrieben mit den Transportstützen unmittelbar verspannt werden.

Die Einzelheiten, weiteren Merkmale und andere Vorteile der Erfindung ergeben sich aus der nachfolgenden Beschreibung von Ausführungsformen anhand der Figuren in der Zeichnung; es zeigen
- Fig. 1: eine erste Ausführungsform der Erfindung im teilweisen Querschnitt durch den Laderaum des Straßentransportfahrzeuges, wobei eine der Transportstützen in Ansicht wiedergegeben ist,
- Fig. 2: einen Schnitt längs der Linie II-II der Fig. 1,
- Fig. 3: eine Ansicht einer Pufferanordnung gemäß der Erfindung in Richtung des Pfeils III der Fig. 1,
- Fig. 4: eine Seitenansicht des Gegenstandes der Fig. 3,
- Fig. 5: die durch den Pfeil V in Fig. 4 bezeichnete Einzelheit im Teilschnitt,
- Fig. 6: eine weitere Ausführungsform der Erfindung im wesentlichen in der Fig. 1 entsprechender Darstellung und
- Fig. 7: ein Straßentransportfahrzeug gemäß der Erfindung im Querschnitt und unter Darstellung verschiedener Transportzustände.

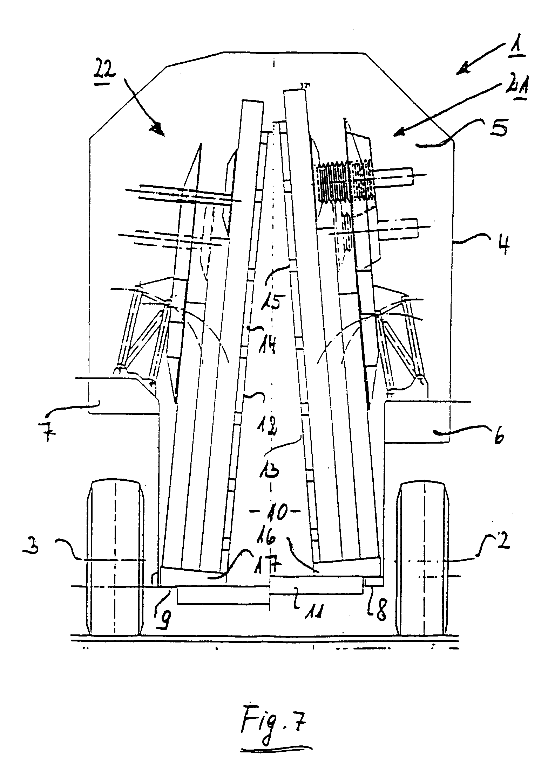

Das neue Straßentransportfahrzeug (1) ist gemäß der Darstellung der Fig. 7 als Auflieger ausgebildet. Der Auflieger hat geteilte Hinterachsen, die bei (2 und 3) angedeutet sind. Der oben mit einer Plane (4) abgedeckte Laderaum (5) des Fahrzeuges erstreckt sich daher unter die Hinterachsen (2, 3) und wird dort nach unten von in Längsrichtung der Chassisträger (6 bzw. 7) verlaufenden Leisten (8 bzw. 9) begrenzt. Auf diesen Leisten ruht ein Transportgestell (10) mit seiner Unterkonstruktion (11). Im Querschnitt ist das Transportgestell allgemein A-förmig und hat daher nach innen geneigte Stützwände (12, 13), die ihrerseits aus einer Rahmenkonstruktion bestehen, in der senkrechte Rahmenglieder (14) mit horizontalen Rahmengliedern (15) zu einer biegesteifen Konstruktion verbunden sind. Die angelehnte Beladung ruht auf Fußstützen (16 bzw. 17) des Transportgestells (10).

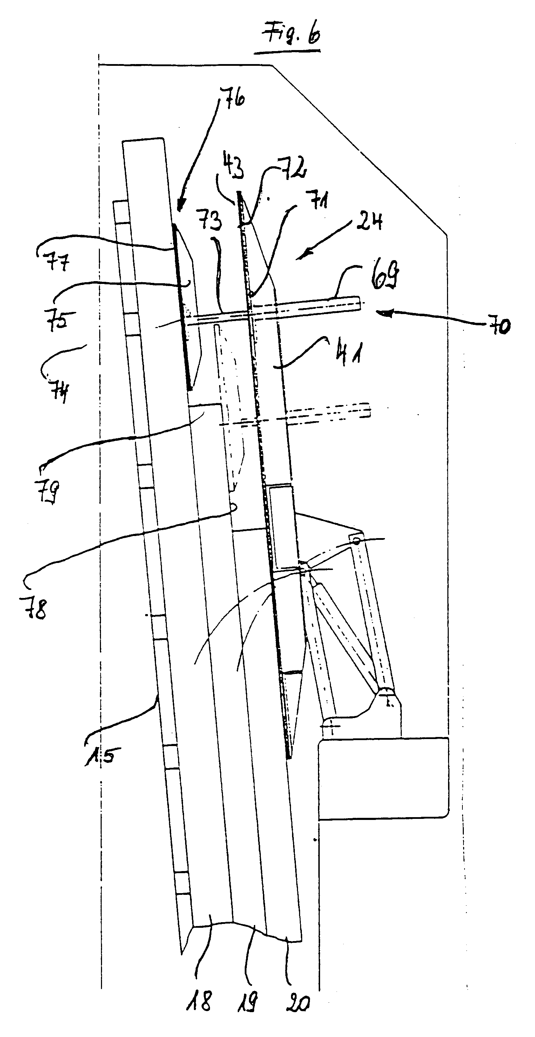

Wie sich aus der Darstellung der Fig. 6 ergibt, besteht die Beladung aus Großtafeln, die gemäß dem dargestellten Ausführungsbeispiel zu Paketen (18-20) zusammengefaßt sind, weil es sich um Glasscheiben handelt. Die Pakete enthalten mehrere Glasscheiben gleicher Abmessungen und sind derart aufeinander und auf den Wänden (14, 15) des Transportgestells (10) abgestützt, daß sie aufrecht stehen.

Das Transportfahrzeug ist an jeder Seite seines Laderaumes (5) mit einer oder mehreren Sicherheitsvorrichtungen (21, 22) versehen. Die beiden Sicherungsvorrichtungen (21, 22) sind identisch ausgebildet. Es genügt daher, ihre Einzelheiten anhand einer der Sicherungsvorrichtungen zu erläutern.

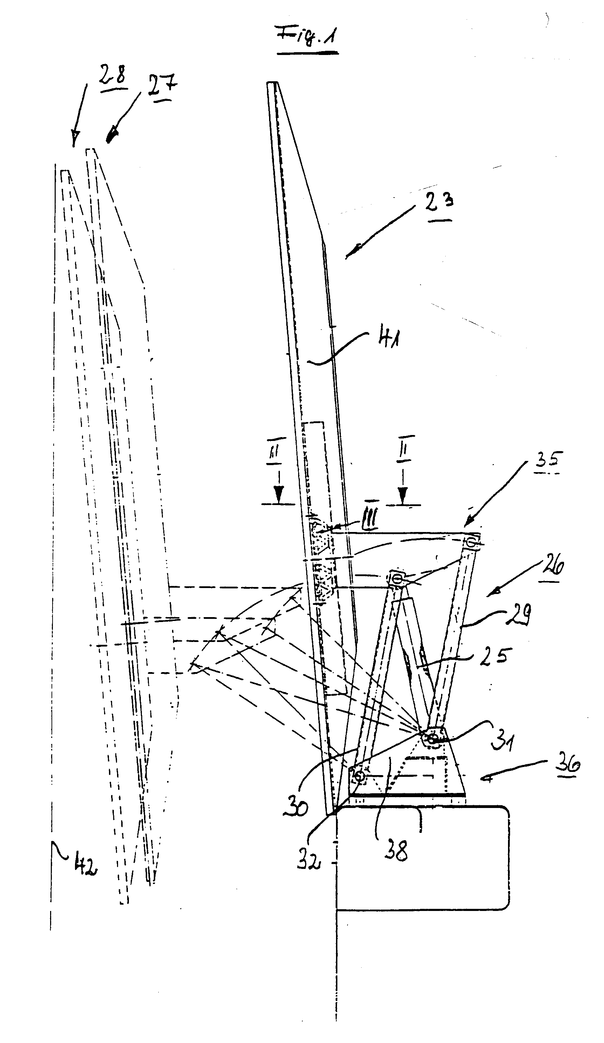

Tatsächlich ist jede der beiden Sicherungsvorrichtungen (21, 22) auf einzeln angetriebene Transportstützen aufgeteilt, welche in der Ausführungsform nach Fig. 1 mit (23) und in der Ausführungsform nach Fig. 6 mit (24) bezeichnet sind. Auch die Transportstützen sind unter sich gleich ausgebildet. Ihre Einzelheiten können daher anhand einer Transportstütze erläutert werden.

Jeder Transportstütze ist, ein Antrieb in Form eines Schubkolbengetriebes (25) und eines allgemein mit (26) bezeichneten Lenkergetriebes zugeordnet. Mit Hilfe dieses Antriebes läßt sich die Transportstütze (23) in eine Freigabestellung verstellen, die in Fig. 1 in ausgezogenen Linien wiedergegeben ist und in der die Transportstütze (23) den Laderaum (5) freigibt. Sie kann jedoch auch in eine Sicherungsstellung verstellt werden, wie in Fig. 6 in ausgezogener Linienführung wiedergegeben ist und in der die Transportstütze (24) der Beladung (18-20) des Transportgestells (10) außen anliegt. Wie man aus der Darstellung der Fig. 1 erkennt, wird durch den Aufbau des Lenkergetriebes (26) erreicht, daß die Transportstützen (23, 24) über ihren gesamten Bewegungsbetrag parallel zu sich selber gehalten werden. In Fig. 1 ist mit der in strichpunktierter Linienführung wiedergegebenen Stellung die Lage der Transportstütze am unbeladenen Transportgestell (10) wiedergegeben, während die in gestrichelter Linienführung wiedergegebene Stellung (28) die Transportstütze in ihrer Endlage zeigt.

Das Lenkergetriebe (26) der Transportstützen (23, 24) ist ein Parallelkurbelgetriebe. Die beiden parallelen Kurbeln (29, 30) sind gleich lang und bilden mit den zwischen ihren Anlenkungen (31-34) liegenden Teillängen von Konsolen (35, 36) eine Vielgelenkkette. Dabei bildet der trapezförmige Teil (37) der Konsole (35) die Getriebekoppel, während der gleichlange und dazu parallele Teil (38) der Konsole (36) die Basis der kinematischen Kette bildet (Fig. 2). Die Konsole (35) ist gabelförmig. Der Bolzen des Gelenkes (33) trägt außerhalb der Gabelzinken die parallelen Lenker (30a, 30b), welche zusammen die Kurbel (30) bilden. Zwischen den Gabelzinken trägt der Gelenkbolzen den ösenförmigen Kopf der Kolbenstange (25a) des Zylinders (25). Auch die Kurbel (29) wird von zwei Lenkern (29a, 29b) gebildet, die außerhalb der Gabel auf dem Bolzen des Gelenkes (34) sitzen. Hierdurch ist eine zentrische Krafteinteilung in einem Puffer (40) gegeben.

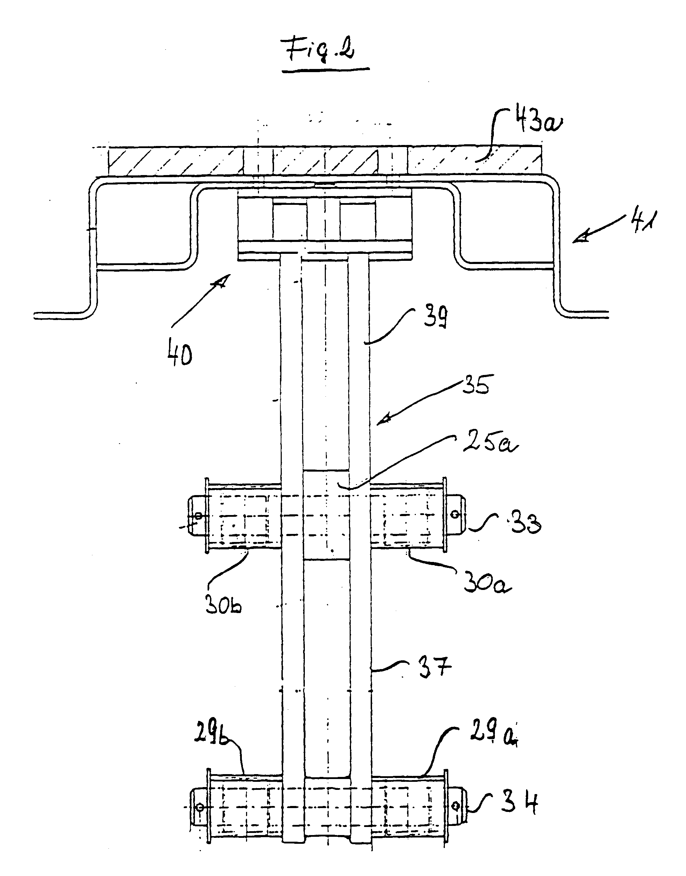

Die Getriebebasis und damit die Hauptebene des Parallelkurbelgetriebes (26) ist quer zum Laderaum (5) orientiert. Die Getriebekoppel (37) weist laderaumseitig einen Kragarm (39) auf. Er ist unter Zwischenschaltung des Puffers (40) (Fig. 3) an die Unterkonstruktion (41) (Fig. 1) begrenzt nachgiebig befestigt. Wie sich aus den Fig. 1 und 6 übereinstimmend ergibt, sitzt der Puffer in allen Ausführungsformen außerhalb der Transportstützenmitte und ist dieser gegenüber nach unten verlegt.

Die strichpunktierten bzw. gestrichelten Linien zwischen den verschiedenen Stellungen der Transportstütze (23 bzw. 24) geben Radien der, Bewegungskurve der Anlenkungen (33, 34) der Parallelkurbeln (29, 30) wieder. Wie sich daraus ergibt, bewegt sich die Transportstütze und ihre Konsole (35) parallel zu sich selber und zwar aus der in ausgezogenen Linien wiedergegebenen Freigabestellung in die in strichpunktierten bzw. gestrichelten Linien wiedergegebenen Transportstellungen (27, 28). Da die Stellungen (27, 28) über die Beladung hinaus in den Innenraum reichen, können Fehlausfluchtungen des Transportgestelles aus der Laderaummitte, die bei (42) in Fig. 1 angegeben ist, ausgeglichen werden.

Die Unterkonstruktion (41) der Transportstützen (23, 24) besteht aus formsteifen Blechen und unterstützt eine im Verhältnis ihrer Längen- und Breitenabmessungen vergleichsweise dünne Platte (43a) aus Gummi oder aus elastischem Werkstoff, welche praktisch keine Längs-und Querbewegungen des Transportgutes in der Transportstellung der Stütze (23) zuläßt.

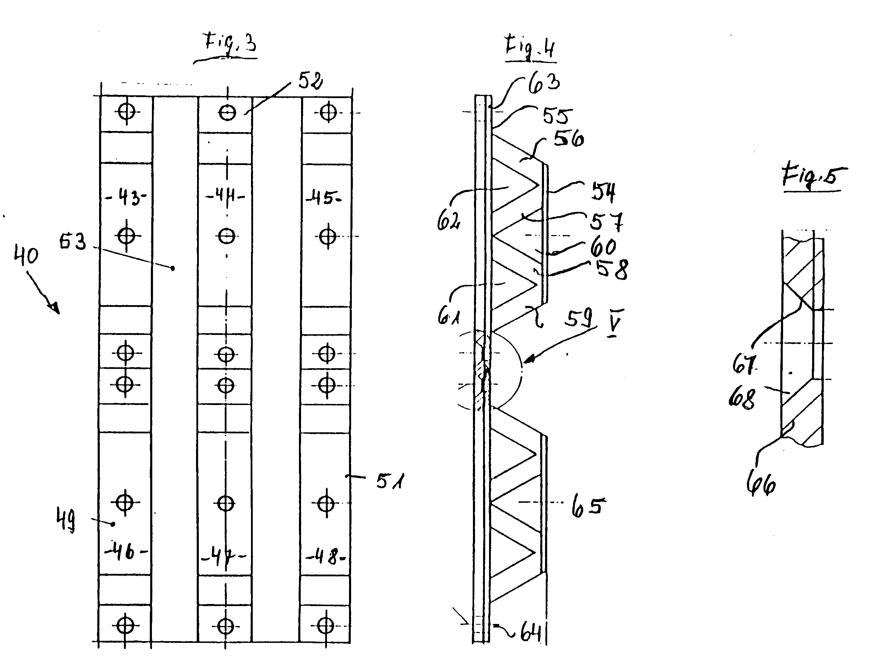

Der Aufbau des Puffers ist insbesondere aus den Fig. 3 bis 5 ersichtlich und bezweckt eine Nachgiebigkeit des Puffers, welche alle Bewegungsbeträge in der Ebene des Transportstützenbelages (43a) ausschaltet. Dazu ist der Puffer aus mehreren Formkörpern (43-48) aufgebaut. Die Formkörper (43, 46; 44, 47 und 45, 48) sind in senkrechten Reihen angeordnet. Die Reihen (49-52) sind in gleichen horizontalen Abständen (53) nebeneinander angeordnet.

Jeder Formkörper eines Puffers weist einen Außenflansch (54) auf, der kürzer als der Innenflansch (55) ist. Die beiden Flansche sind durch dachförmig geneigte Profilstege (56-59) unterstützt. Diese Stege unterteilen gleichzeitig einen Hohlraum in Teilräume (60-62), die in horizontaler Richtung, d.h. quer zu den Reihen (49-52) offen sind. Die Verlängerungen des Flansches (55) sind mit Bohrungen (63, 64) versehen, während der kürzere Flansch (54) in der Mitte eine Bohrung (65) aufweist. Die Bohrungen nehmen Befestigungsschrauben auf, die in den Figuren nicht dargestellt sind. Dabei sitzen die Anschlußschrauben des Kragarms (39) in den Bohrungen (65), während die Unterkonstruktion (41) mit einer Platte (66) verschraubt ist, welche zur Aufnahme der Schraubenköpfe, welche die Bohrungen (63, 64) durchsetzen, mit Kegelflächen (67, 68) versehen ist.

Während die Ausführungsform nach Fig. 1 eine durchgehende Abstützung der Beladung mit Hilfe der Stützen (23) ermöglicht, unterscheidet sich hiervon die Ausführungsform nach den Fig. 6 und 7. Hierbei sitzt nämlich an der Unterkonstruktion (41) der Stützen (24) ein Arbeitszylinder (69) eines hydraulischen oder pneumatischen Schubkolbengetriebes (70). Zur Befestigung dient eine an dem Zylinder (69) feste Platte (71), welche mit Hilfe von Schrauben an der Trägerplatte (71) der Unterkonstruktion befestigt ist, die den Belag (43) unterstützt. Die Platte (71) ist der Höhe nach verschiebbar und kann damit zusammen mit dem Schubkolbengetriebe (70) in verschiedene Positionen arretiert werden. Die verschiedenen Stellungen des Schubkolbengetriebes (70) sind in ausgezogenen und gestrichelten Linien in den Fig. 6 und 7 wiedergegeben.

Die Kolbenstange (73) des Zylinders (69) sitzt ebenfalls mit einer Platte (74) auf der Unterkonstruktion (75) einer Stützplatte (76), die ähnlich wie die Transportstütze (24) mit einem elastischen bzw. elastomeren Belag (77) versehen ist, der dem Belag (43a) entspricht. Wie sich aus der Darstellung der Fig. 6 ergibt, sitzt die Befestigungsplatte (74) exzentrisch, d.h. aus der Mitte der Stützplatte (76) heraus nach unten versetzt an der Unterkonstruktion (75). Hierdurch wird erreicht, daß der Kraftangriffspunkt des Schubkolbengetriebes (70) auch dann noch auf der Fläche (78) des Paketes (19) liegt, wenn der größere Teil der Platte (76) infolge der verminderten vertikalen Abmessungen des Paketes (79) oberhalb des oberen Paketrandes (79) zu liegen kommt. Beschädigungen der Glasscheiben am oberen Rand (79) werden dadurch verhindert.

## Patentansprüche

1. Straßentransportfahrzeug (1) mit innen angeordnetem Laderaum (5) für ein Transportgestell (10) mit beiderseitiger, nach innen angeordneter Beladung (18 - 20), vorzugsweise aus aufrecht stehenden Glasscheiben oder Glasscheibenpaketen und mit Transportstützen (23, 24) aus beiderseits des Laderaumes fahrzeugfest angeordneten Sicherungsvorrichtungen (21, 22) die mit Antrieben aus einem Schubkolbengetriebe (25) und einem Parallelkurbelgetriebe (26) in eine Sicherungsstellung, in der die Transportstützen (23, 24) der Beladung (18- 20) des Transportgestells (10) außen anliegen und einer Freigabestellung, in der die Transportstützen (10) den Laderaum (5) freigeben und parallel zu sich selbst mit einer der Neigung der Beladung (18 - 20) entsprechenden Schrägstellung beweglich sind, dadurch gekennzeichnet, daß die Sicherungsvorrichtungen (21, 22) jeder Laderaumseite auf einzeln angetriebene Transportstützen (23, 24) aufgeteilt sind, denen jeweils ein Antrieb (25, 26) zugeordnet ist, dessen Getriebebasis (38) quer zum Laderaum (5) angeordnet ist und dessen Getriebekoppel (37) laderaumseitig einen Kragarm (39) aufweist, an dem unter Zwischenschaltung eines Puffers (40) die Unterkonstruktion (41) der Transportstütze (23, 24) begrenzt nachgiebig befestigt ist, wobei der Puffer aus der Mitte der Transportstütze (23,24) nach unten verlegt ist.

2. Straßentransportfahrzeug nach Anspruch 1, dadurch gekennzeichnet, daß die Transportstützen (23, 24) über die Sicherungsstellung hinaus bis an das unbeladene Transportgestell (10) und noch darüber hinaus in den Laderaum (5) beweglich sind.

3. Straßentransportfahrzeug nach einem oder beiden Ansprüchen 1 oder 2, dadurch gekennzeichnet, daß der Puffer (40) in der Bewegungsrichtung des Kragarmes (39) der Getriebekoppel (37) begrenzt nachgiebig ist.

4. Straßentransportfahrzeug nach Anspruch 1 und einem oder beiden Ansprüchen 2 und 3, dadurch gekennzeichnet, daß der Puffer (40) aus mehreren Formkörpern (43 - 48) aus elastischen oder elastomeren Werkstoff besteht, die in nebeneinander angeordneten Reihen (49 - 52) untereinander angeordnet sind.

5. Straßentransportfahrzeug nach Anspruch 1 und einem oder mehreren der Ansprüche 2 bis 4, dadurch gekennzeichnet, daß jeder Formkörper (43 - 48) des Puffers (40) aus einem Hohlprofil besteht, dessen parallele Flansche (54, 55) von dachförmig geneigten Profilstegen (56 - 59) unterstützt sind, die den Hohlraum (60 - 62) unterteilen.

6. Straßentransportfahrzeug nach Anspruch 1 und einem oder mehreren der Ansprüche 2 bis 5, dadurch gekennzeichnet, daß oberhalb der Pufferbefestigung an der Tragkonstruktion (41) wenigstens einiger Transportstützen (23, 24) Stützplatten (76) mit eigenen Antrieben (70) verlagert sind.

7. Straßentransportfahrzeug (1) mit innen angeordnetem Laderaum (5) für ein Transportgestell (10) mit beiderseitiger, nach innen geneigter Beladung (18 - 20), welche vorzugsweise aus aufrecht stehenden Glasscheiben oder Glasscheibenpaketen besteht und Transportstützen (23, 24), die von beiderseits des Laderaumes fahrzeugfest angeordneten Sicherungsvorrichtungen (21, 22) gebildet werden, welche mit Antrieben aus einem Schubkolbengetriebe (25) und einem Lenkergetriebe (26) mit einer der Beladung (18 - 20) entsprechenden Schrägstellung in eine Sicherungsstellung zur Festlegung der Beladung (18 - 20) von außen mit Hilfe eines elastischen oder elastomeren Belages (77) der Unterkonstruktion (41) jeder Transportstütze (23, 24) und in eine Freigabestellung beweglich sind, in der die Transportstützen (23, 24) den Laderaum (5) freigeben, dadurch gekennzeichnet, daß oberhalb der Pufferbefestigung an der Unterkonstruktion (41) wenigstens einiger Transportstützen (23, 24) Stützplatten (76) mit eigenen Antrieben (70) verlagert sind.

8. Straßentransportfahrzeug nach einem der Ansprüche 6 oder 7, dadurch gekennzeichnet, daß die Stützplatten (76) exzentrisch an ihre Antriebe (70) angeschlossen sind und die Anschlüsse aus der Stützplattenmitte nach unten verlegt sind.

9. Straßentransportfahrzeug nach jedem der Ansprüche 6 bis 8, dadurch gekennzeichnet, daß die Antriebe (70) der Stützplatten (76) versteckbar und nach oben und unten verstellbar an den Transportstützen (24) angebracht sind.

10. Straßentransportfahrzeug nach Anspruch 6 oder 7 und jedem der Ansprüche 8 oder 9, dadurch gekennzeichnet, daß die Antriebe (70) der Stützplatten (76) aus Schubkolbengetrieben (69, 73) bestehen, die mit ihren Zylindern (69) an die Unterkonstruktion (41) der Stützen (24) angeschlossen sind.

11. Straßentransportfahrzeug nach Anspruch 6 oder 7 und einem oder mehreren der Ansprüche 8 bis 10, dadurch gekennzeichnet, daß die Stützplatten (76) eine Unterkonstruktion (75) aufweisen, an die die Kolbenstange (73) des Schubkolbengetriebes (70) angeschlossen ist und die einen elastischen bzw. elastomeren Belag (77) unterstützt.

## Claims

1. A road transport vehicle (1) having an internally arranged load receiving space (5) for a transport frame (10) with a load (18 through 20) on either side and inwardly arranged, preferably in the form of vertically standing sheets of glass or packages of glass and transport supports (23 and 24) in the form of securing devices (21 and 22) fixed in relation to the vehicle on either side of the load receiving space which are able to be moved by means of drives - which are in the form of a thrust piston linkage (25) and a parallel crank linkage (26) - into a securing position, in which the transport supports (23 and 24) for the load (18 through 20) of the transport frame (10) are to the outside and a release position, in which the transport supports (10) clear the load receiving space (5) and parallel to themselves with an oblique setting corresponding to a slope of the load (18 through 20), characterized in that the securing devices (21 and 22) on each side are divided up among the individually driven transport supports (23 and 24), to each of which one drive (25 and 26) is allotted, whose linkage base (38) is arranged transversely in relation to the load receiving space (5) and whose linkage link (37) on the load receiving side has a projecting arm (39), on which - with the intermediate placement of a buffer (40) - the lower structure (41) of the transport support (23 and 24) is attached with a limited degree of yielding motion, the buffer being arranged in a lower position clear of the center of the transport support (23 and 24).

2. The road transport vehicle as claimed in claim 1, characterized in that the transport supports (23 and 24) are able to be moved past the securing position as far as the unloaded transport frame (10) and even farther into the load receiving space (5).

3. The road transport vehicle as claimed in either or both of the claims 1 and 2, characterized in that the buffer (40) is capable of a limited degree of yielding motion in the direction of movement of the projecting arm (39) of the linkage link (37).

4. The road transport vehicle as claimed in claim 1 and either or both of the claims 2 and 3, characterized in that the buffer (40) consists of a plurality of shaped bodies (43 through 48) of elastic or elastomeric material, which are arranged together in adjacent rows (49 through 52).

5. The road transport vehicle as claimed in claim 1 and any one or more of the claims 2 through 4, characterized in that each shaped body (43 through 48) of the buffer (40) consists of a hollow section, whose parallel flanges (54 and 55) are supported by oppositely downwardly sloping section webs (56 through 59), which divide up the cavity (60 through 62).

6. The road transport vehicle as claimed in claim 1 and any one or more of the claims 2 through 5, characterized in that above the buffer attachment on the support structure (41) of at least some transport supports (23 and 24) support plates (76) with their own drives (70) are placed.

7. A road transport vehicle (1) having an internally arranged load receiving space (5) for a transport frame (10) with an inwardly slanted load (18 through 20) on either side preferably in the form of vertically standing sheets of glass or packages of glass and with transport supports (23 and 24) in the form of securing devices (21 and 22) fixed in relation to the vehicle on either side of the load receiving space which are able to be moved by means of drives - which are in the form of a thrust piston linkage (25) and a parallel crank linkage (26) - with an oblique setting corresponding to the load (18 through 20) into a securing position for holding the load (18 through 20) from the outside with the aid of an elastic or elastomeric pad (77) of the lower structure (41) of each transport support (23 and 24) and into a release position, in which the transport supports (23 and 24) clear the load receiving space (5), characterized in that over the buffer attachment on the lower structure (41) of at least some of the transport supports (23 and 24) support plates (76) are positioned having their own drives (70).

8. The road transport vehicle as claimed in claim 6 or claim 7, characterized in that the support plates (76) are connected eccentrically to their drives (70) and the connections are placed in a lower position clear of the center of the support plate.

9. The road transport vehicle as claimed in each of claims 6 through 8, characterized in that the drives (70) of the support plates (76) are mounted the transport supports (24) so that they are able to be moved upward and downward and concealed.

10. The road transport vehicle as claimed in claim 6 or claim 7 and both of claims 8 and 9, characterized in that the drives (70) of the support plates (76) consist of thrust piston linkages (69 and 76) which have cylinders (69) thereof connected with the lower structure (41) of the supports (24).

11. The road transport vehicle as claimed in claim 6 or claim 7 and any one or more of the claims 8 through 10, characterized in that the support plates (76) possess a lower structure (75), with which the piston rod (73) of the thrust piston linkage (70) is connected and which supports an elastic or, respectively, elastomeric pad (77).

## Revendications

1. Véhicule routier (1) à capacité de charge intérieure (5) pour porte-charges (10) à charge (18-20) aux deux côtés disposée vers l'intérieur, en particulier pour vitres ou paquets de vitres debout, et à supports de transport (23,24) constitués par des dispositifs de retenu (21,22) montés au véhicule des deux côtés du porte-charges de façon fixe, qui sont mobiles par des entraînements constitués par un entraînement de piston à poussée (25) et par un mécanisme à manivelles parallèles (26) à une position de sécurité, dans laquelle les supports de transport (23,24) de la charge (18-20) du porte-charges (10) adhèrent à l'extérieur, et à une position de relâchement, dans laquelle les supports de transport (10) relâchent la capacité de charge (5) et sont parallèles les uns vers les autres à une position inclinée correspondant à l'inclination de la charge (18-20), **caractérisé en ce que** les dipositifs de retenu (21,22) de chaque côté de la capacite de charge sont distribués sur des supports de transport (23,24) entraînés séparement, à chacun de qui est attribué un entraînement (25,26), dont la base d'entraînement (38) est disposée transversalement à la capacité de charge (5) et dont la bielle d'entraînement (37) comporte, à la côté de la capacité de charge, un bras en porte à faux (39), auquel est fixé, avec interpose d'un butoir (40), la construction inférieure (41) du support de transport (23,24) avec une élasticité limitée, le butoir étant déplaçé du centre du support de transport (23,24) vers le bas.

2. Véhicule routier selon la revendication 1, **caractérisé en ce que** les supports de transport (23,24) sont mobiles au-delà da la position de sécurité jusqu'au porte-charges (10) non-chargé, et encore au-delà de cela, jusqu'à la capacité de charge (5).

3. Véhicule routier selon l'une ou les deux des revendications 1 ou 2, **caractérisé en ce que** le butoir (40) a une élasticité limitée en direction du mouvement du bras en porte à faux (39) de la bielle d'entraînement (37).

4. Véhicule routier selon la revendication 1 et l'une ou les deux des revendications 2 et 3, **caractérisé en ce que** le butoir (40) est consituté de plusieurs profilés (43-48) en matériau élastique ou élastomère, qui sont disposés en rangées juxtaposées (49-52) les uns sous les autres.

5. Véhicule routier selon la revendication 1 et l'une ou plusieurs des revendications 2 à 4, **caractérisé en ce que** chaque profilé (43-48) du butoir (40) est constitué par un profil creux, dont les flasques parallèles (54,55) sont supportées par des traverses profilées (56-59) inclinées en forme de toit, qui subdivisent l'espace creux (60-62).

6. Véhicule routier selon la revendication 1 et l'une ou plusieurs des revendications 2 à 5, **caractérisé en ce qu'** au-dessus de la fixation du butoir à la construction de support (41) d'au moins quelquesuns des supports de transport (23,24) des plaques d'appui (76) avec propres entraînements (70) sont deplacés.

7. Véhicule routier (1) à capacité de charge intérieure (5) pour porte-charges (10) à charge (18-20) aux deux côtés inclinée vers l'intérieur, en particulier pour vitres ou paquets de vitres debout, et à supports de transport (23,24) constitués par des dispositifs de retenu (21,22) montés au véhicule des deux côtés du porte-charges de façon fixe, qui sont mobiles par des entraînements constitués par un entraînement de piston à poussée (25) et par un mécanisme à bielle (26), à une position inclinée correspondant à la charge (18-20), à une position de sécurité pour fixer la charge (18-20) de l'extérieur à l'aide d'un revêtement élastique ou élastomère (77) de la construction inférieure (41) de chaque support de transport (23,24), et à une position de relâchement, dans laquelle les supports de transport (23,24) relâchent la capacité de charge (5), **caractérisé en ce qu'**au-dessus de la fixation du butoir à la construction inférieure (41) d'au moins quelquesuns des supports de transport (23,24) des plaques d'appui (76) avec propres entraînements (70) sont déplacés.

8. Véhicule routier selon l'une des revendications 6 ou 7, **caractérisé en ce que** les plaques d'appui (76) sont jointes à leurs entraînements (70) excentriquement, et que les joints sont posés du centre des plaques d'appui vers le bas.

9. Véhicule routier selon chacune des revendications 6 à 8, **caractérisé en ce que** les entraînements (70) des plaques d'appui (76) sont déguisables et qu'ils sont montés aux supports de transport (24) de façon réglable vers le haut et vers le bas.

10. Véhicule routier selon la revendication 6 ou 7 et chacune des revendications 8 ou 9, **caractérisé en ce que** les entraînements (70) des plaques d'appui (76) sont constitués d'entraînements à piston de poussée (69,73), qui sont raccordés par leurs cylindres (69) à la construction (41) inférieure des supports (24).

11. Véhicule routier selon la revendication 6 ou 7 et une ou plusieurs des revendications 8 à 10, **caractérisé en ce que** les plaques d'appui (76) comprennent une construction inférieure (75), à laquelle est raccordée la tige de piston (73) de l'entraînement à piston de poussée (70), et qui supporte un revêtement élastique ou élastomère (77).
